# FASCICULE DE BREVET EUROPEEN

(11) **EP 3 555 442 B1**
(45) Date de publication et mention de la délivrance du brevet: **03.03.2021**
(21) Numéro de dépôt: 17816578.3
(22) Date de dépôt: 30.11.2017
(51) Int. Cl.: F02B 37/16, F02D 23/00, F02D 41/00

(54) **METHODE DE CONTROLE DE LA QUANTITE D'AIR COMPRIME INTRODUIT A L'ADMISSION D'UN MOTEUR A COMBUSTION INTERNE SURALIMENTE**
STEUERVERFAHREN FÜR DIE MENGE AN VERDICHTETER LUFT, DIE IN DAS ANSAUGSYSTEM EINES VERBRENNUNGSMOTORS EINGEFÜHRT WIRD
METHOD OF CONTROLLING THE QUANTITY OF COMPRESSED AIR INTRODUCED AT THE INTAKE OF AN INTERNAL COMBUSTION ENGINE

(30) Priorité: 15.12.2016 FR 1662489
(43) Date de publication de la demande: 23.10.2019
(73) Titulaire: IFP Energies nouvelles, 92852 Rueil-Malmaison (FR)
(72) Inventeur: COLLIOU, Thierry, 38138 Les Cotes D'Arey (FR); WALTER, Bruno, 42800 Chagnon (FR)
(74) Mandataire: IFP Energies nouvelles
(86) Numéro de dépôt international: PCT/EP2017/080973
(87) Numéro de publication internationale: WO 2018/108551

(56) Documents cités:
- EP-A2- 1 138 928
- FR-A1- 3 024 178
- FR-A3- 2 953 561
- US-A1- 2015 059 714

## Description

La présente invention se rapporte à une méthode de contrôle d'un dispositif d'introduction d'une quantité d'air à l'admission d'un moteur à combustion interne suralimenté par une turbocompresseur à simple ou à double entrée, notamment d'un moteur pour un véhicule automobile ou pour un véhicule industriel ou pour une unité stationnaire.

Comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion. Cette opération, appelée suralimentation, peut être réalisée par tous moyens, tel qu'un turbocompresseur ou un compresseur entraîné, qui peut être centrifuge ou volumétrique.

Dans le cas d'une suralimentation par un turbocompresseur à simple entrée, ce dernier comprend une turbine rotative, munie d'une seule entrée, reliée par un axe à un compresseur rotatif. Les gaz d'échappement issus du moteur traversent la turbine qui est alors entrainée en rotation. Cette rotation est ensuite transmise au compresseur qui, de par sa rotation, comprime l'air extérieur avant qu'il ne soit introduit dans la chambre de combustion.

Comme cela est mieux décrit dans la demande de brevet français N° 2 478 736, il est prévu, pour pouvoir amplifier de manière significative cette quantité d'air comprimé dans la chambre de combustion du moteur, d'augmenter encore plus la compression de l'air extérieur par le compresseur.

Cela se réalise plus particulièrement en augmentant la vitesse de rotation de la turbine et donc du compresseur.

Pour cela, une partie de l'air comprimé sortant du compresseur est déviée pour être admis directement à l'entrée de la turbine en se mélangeant avec les gaz d'échappement. Cette turbine est alors traversée par une plus grande quantité de fluide (mélange d'air comprimé et de gaz d'échappement), ce qui permet d'amplifier la vitesse de rotation de la turbine (ou Boost) et par conséquence du compresseur. Cette augmentation de vitesse du compresseur permet ainsi d'augmenter la pression de l'air extérieur qui sera comprimé dans ce compresseur puis introduit dans la chambre de combustion du moteur.

Par cela, l'air comprimé a une densité plus élevée ce qui permet d'accroitre la quantité d'air contenue dans la chambre de combustion.

Dans le cas de l'amélioration mentionnée dans la demande de brevet français N° 3 024 178 du demandeur, il est prévu de disposer d'un turbocompresseur à double entrée (ou twin scroll) et de dévier une partie de l'air comprimé sortant du compresseur pour être admis directement à chaque entrée de la turbine en se mélangeant avec les gaz d'échappement. Cela permet d'augmenter encore plus la vitesse de la turbine et du compresseur et la quantité d'air véhiculé vers le moteur.

Il est également connu par le document EP 1 138 928 d'associer à cette amplification (Boost) une recirculation des gaz d'échappement (EGR pour "Exhaust Gas Recirculation").

En effet, la plupart des moteurs Diesel sont équipés d'un circuit de recirculation de gaz d'échappement, dit circuit EGR, pour limiter à la source les émissions de NOx contenus dans ces gaz.

La recirculation de gaz d'échappement telle qu'illustré par le document EP 1 138 928 permet de d'introduire des gaz d'échappement du moteur vers l'admission de ce moteur.

Ces types de moteur suralimenté, bien que donnant satisfaction, présentent néanmoins des inconvénients non négligeables.

En effet, le débit de l'air comprimé qui est admis à l'entrée (ou aux entrées) de la turbine n'est pas correctement contrôlé, ce qui peut entrainer un dysfonctionnent du moteur.

Ainsi, à titre d'exemple, en cas de trop grande quantité d'air comprimé déviée à l'entrée de la turbine, les gaz d'échappement entrant dans la turbine sont refroidis de manière trop importante par cet air, et amène une diminution du rendement global de la suralimentation.

La présente invention se propose de remédier aux inconvénients mentionnés ci-dessus grâce à une méthode de contrôle d'un dispositif d'introduction d'une quantité d'air à l'admission d'un moteur à combustion interne suralimenté qui permet de répondre à toutes les demandes de puissance du moteur, et en particulier dans les phases de fonctionnement transitoire.

L'invention permet de réaliser et de gérer un transfert de l'air comprimé de l'admission vers l'échappement même quand la pression moyenne de l'air comprimé à l'admission est inférieure à celle des gaz à l'échappement. Il suffit uniquement qu'il existe des phases durant le cycle de fonctionnement du moteur où la pression à l'admission est supérieure à celle existant à l'échappement.

Ainsi, la présente invention concerne une méthode de contrôle de la quantité d'air introduit à l'admission d'un moteur à combustion interne suralimenté, ledit moteur comprenant un collecteur d'admission et au moins une sortie de gaz d'échappement reliée à un collecteur d'échappement, ledit moteur comprenant un turbocompresseur avec une turbine à au moins une entrée connectée à ladite au moins sortie de gaz d'échappement et avec un compresseur d'air extérieur, et au moins un circuit d'amplification de la vitesse de la turbine avec au moins un conduit de transfert pour l'air comprimé du compresseur vers l'entrée de la turbine contrôlé par un moyen de vannage, caractérisée en ce que :
- à partir d'un point de fonctionnement et d'une cartographie prédéfinie du moteur, on connait le débit d'air comprimé objectif qui doit être introduit dans la turbine par le circuit d'amplification,
   - on estime le débit d'air réel qui est admis dans turbine au travers du circuit d'amplification,
   - on compare les deux débits,
   - en cas de différence entre les deux débits, on contrôle le débit d'air introduit dans la turbine par le circuit d'amplification pour qu'il corresponde au débit d'air objectif.

On peut fermer le transfert pour l'air comprimé du compresseur vers l'entrée de la turbine lorsque la différence entre le débit d'air comprimé objectif et le débit d'air estimé est nulle.

Lorsque le moteur peut comprendre en outre un circuit de recirculation de gaz d'échappement vers le collecteur d'admission, on peut maintenir en fermeture le circuit d'amplification de la vitesse de la turbine pour l'utilisation du circuit de recirculation de gaz d'échappement.

Pour l'utilisation du circuit d'amplification de la vitesse de la turbine, on peut maintenir en fermeture le circuit de recirculation de gaz d'échappement.

Lorsque le moteur peut comprendre en outre un circuit de recirculation de gaz d'échappement vers le collecteur d'admission, on peut contrôler le débit d'air introduit dans la turbine par le circuit d'amplification pour compenser le débit de gaz d'échappement recirculés pour l'utilisation simultanée du circuit d'amplification de la vitesse de la turbine et du circuit de recirculation de gaz d'échappement.

On peut estimer le débit d'air comprimé par la mesure de débit d'admission.

On peut estimer le débit d'air comprimé par la mesure de la richesse à l'échappement.

Les autres caractéristiques et avantages de l'invention vont apparaître à la lecture de la description qui va suivre, donnée à titre uniquement illustratif et non limitatif, et à laquelle sont est annexées :
- la figure 1 qui illustre un moteur à combustion interne avec son dispositif de suralimentation utilisé selon l'invention ;
- la figure 2 qui illustre une autre configuration de la figure 1 ;
- la figure 3 qui est un graphique (vitesse du moteur (tr/min) en fonction du couple (N.m)) avec un marquage situant la zone d'amplification (zone Boost) pour le moteur des figures 1 et 2;
- la figure 4 qui illustre un moteur à combustion interne avec son dispositif de suralimentation utilisé selon une première variante de l'invention;
- la figure 5 qui est un graphique (vitesse du moteur (tr/min) en fonction du couple (N.m)) avec des marquages situant la zone d'amplification (zone Boost) et la zone de recirculation de gaz d'échappement (zone EGR) l'une par rapport à l'autre pour le moteur de la figure 4;
- la figure 6 qui illustre un moteur à combustion interne avec son dispositif de suralimentation utilisé selon une deuxième variante de l'invention et
- la figure 7 qui est un graphique (vitesse du moteur (tr/min) en fonction du couple (N.m)) avec des marquages situant la zone d'amplification (zone Boost), la zone de recirculation de gaz d'échappement (zone EGR) et la combinaison des deux zones pour le moteur de la figure 6.

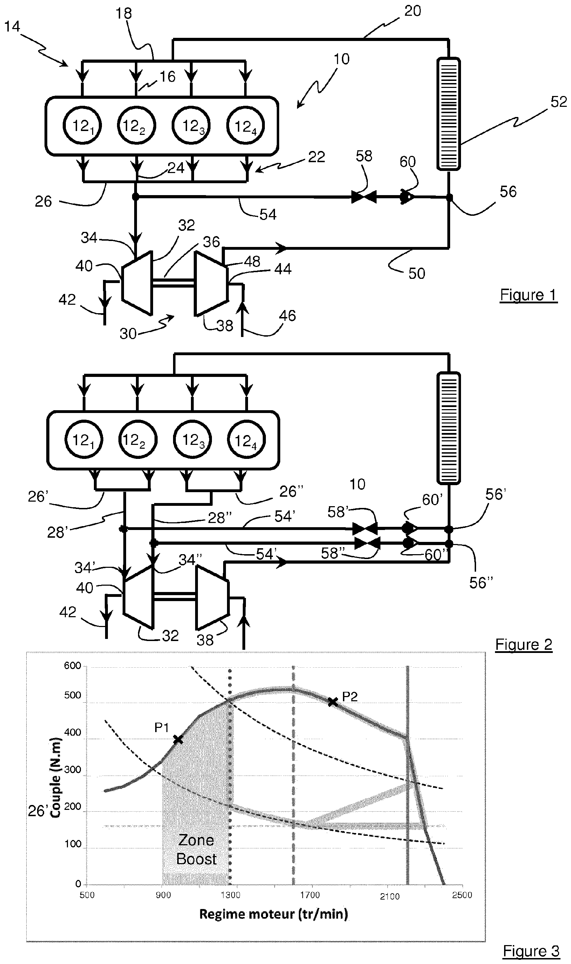

Sur la figure 1, le moteur à combustion interne 10 comprend au moins deux cylindres, ici quatre cylindres référencés 12₁ à 12₄ à partir de la gauche de la figure.

De manière préférentielle, ce moteur est un moteur à combustion interne à injection directe, notamment de type Diesel, mais cela n'écarte en aucune manière tout autre type de moteur à combustion interne.

Chaque cylindre comprend des moyens d'admission 14 avec au moins une soupape d'admission (non représentée) contrôlant une tubulure d'admission 16. Les tubulures d'admission 16 aboutissent à un collecteur d'admission 18 alimenté par un conduit d'alimentation 20 en air, tel que de l'air comprimé.

Ce cylindre comprend aussi des moyens d'échappement des gaz brûlés 22 avec au moins une soupape d'échappement (non représentée) contrôlant une tubulure d'échappement 24.

Les tubulures d'échappement sont connectées à un collecteur d'échappement 26 avec une sortie de gaz d'échappement 28. La sortie de gaz d'échappement aboutit à un turbocompresseur 30 pour la compression de l'air et plus particulièrement à la turbine de détente 32 de ce turbocompresseur.

Comme illustré sur la figure 1, le turbocompresseur est un turbocompresseur avec une turbine avec une seule entrée 34 qui est balayée par les gaz d'échappement et qui est reliée en rotation par un arbre 36 avec un compresseur 38. L'évacuation de gaz d'échappement 40 de la turbine est raccordée conventionnellement à la ligne d'échappement 42 du moteur.

Le compresseur 38 comporte une admission d'air extérieur 44 alimentée par une conduite d'alimentation 46. La sortie d'air comprimé 48 de ce compresseur est reliée au conduit d'alimentation 20 du collecteur d'admission 18 par une conduite d'air comprimé 50.

De manière avantageuse, il peut être prévu de placer un radiateur de refroidissement 52 de l'air comprimé sur la conduite 50, entre le compresseur et la conduite 20.

Comme mieux visible sur la figure 1, un conduit de transfert 54 permet de faire circuler une partie de l'air comprimé sortant du compresseur 38 vers l'entrée 34 de la turbine. Plus précisément, ce conduit de transfert partiel prend naissance sur la conduite 50, à un point de d'intersection 56 entre le compresseur et le radiateur de refroidissement 52, et aboutit à l'entrée 34 de la turbine par sa jonction avec la sortie de gaz d'échappement 28.

Ce conduit de transfert porte des moyens de vannage 58, comme une vanne proportionnelle, commandés par un moyen de commande (non représenté). Cette vanne permet ainsi de contrôler la circulation de l'air comprimé qui passe dans le conduit de transfert. Le conduit comprend également un clapet anti-retour 60 qui interdit la circulation de l'air comprimé du conduit vers le compresseur.

Cette configuration permet ainsi, pendant le fonctionnement du moteur, d'introduire de l'air comprimé dans la turbine et d'augmenter ainsi le débit de cette turbine et par conséquent du compresseur. Cela permet également d'avoir une suralimentation plus efficace pour les bas régimes.

L'exemple de la configuration de la figure 2 se distingue de la figure 1 par le fait que le turbocompresseur est un turbocompresseur avec une turbine 32 à double entrée 34' et 34" (Twin scroll).

Dans cette configuration, les tubulures d'échappement du premier cylindre 12₁ et deuxième cylindre 12₂, qui forment un premier groupe d'au moins un cylindre, sont connectées à un premier collecteur d'échappement 26' avec une première sortie de gaz d'échappement 28'. Les tubulures d'échappement du troisième et quatrième 12₃ et 12₄, qui forment un deuxième groupe d'au moins un cylindre, sont connectées à un deuxième collecteur d'échappement 26" qui comporte une deuxième sortie de gaz d'échappement 28".

Les deux sorties de gaz d'échappement aboutissent à la turbine avec une première entrée 34' de gaz d'échappement raccordée à la première sortie 28' de gaz d'échappement du premier collecteur 26' et une deuxième entrée 34" raccordée à la deuxième sortie 28" de gaz d'échappement du deuxième collecteur d'échappement 26".

L'évacuation de gaz 40 de la turbine est raccordée conventionnellement à la ligne d'échappement 42 du moteur.

Comme mieux visible sur la figure 2, il est prévu, en lieu et place du conduit 54, deux conduits de transfert 54' et 54" qui permettent de faire circuler une partie de l'air comprimé sortant du compresseur 38 vers les entrées 34' et 34" de la turbine.

Plus précisément, chaque conduit de transfert partiel prend naissance sur la conduite 60, à un point de d'intersection 56' et 56" entre le compresseur et le radiateur de refroidissement 52. L'un 54' des conduits aboutit à l'entrée 34' de la turbine par sa jonction avec la première sortie 28' de gaz d'échappement alors que l'autre 54" des conduits aboutit à l'autre entrée 34" de cette turbine par sa jonction avec la deuxième sortie 28" de gaz d'échappement.

Chaque conduit porte des moyens de vannage 58' et 58", comme une vanne proportionnelle, commandés par un moyen de commande, qui peut être commun aux deux moyens de vannage. Cette vanne permet ainsi de contrôler la circulation de l'air comprimé qui passe dans le conduit.

Avantageusement, chaque conduit comporte également un clapet anti-retour 60' et 60" qui interdit la circulation de l'air comprimé du conduit vers le compresseur.

Cette configuration permet ainsi, pendant le fonctionnement du moteur, de profiter des zones de basse pression échappement régnant ponctuellement dans les collecteurs d'échappement pour introduire de l'air comprimé dans la turbine et augmenter ainsi le débit de cette turbine et par conséquent du compresseur. Cela permet également d'avoir une suralimentation plus efficace pour les bas régimes.

Comme illustré sur la figure 3, durant le fonctionnement du moteur, ce dernier peut fonctionner avec une augmentation de la vitesse de la turbine, montrée par le marquage "Zone Boost" ou sans augmentation de cette vitesse en dehors de cette zone.

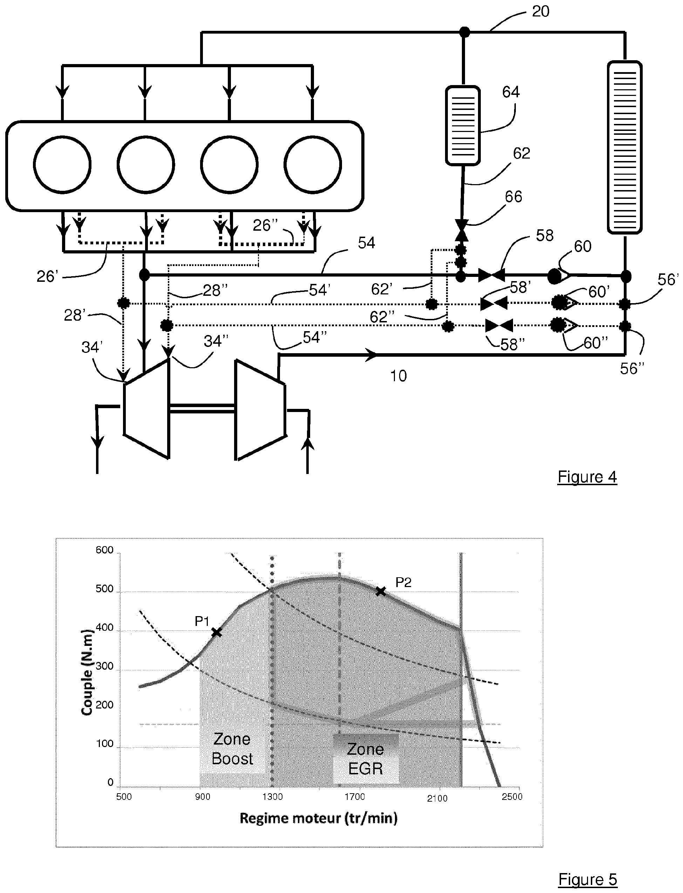

Comme mieux visible sur la variante de la figure 4, il est prévu de disposer, en plus du circuit d'amplification de vitesse de la turbine (circuit Boost) avec le conduit de transfert 54 et sa vanne 58 ainsi que son clapet anti-retour 60, d'un circuit de recirculation des gaz d'échappement (circuit EGR) vers l'admission du moteur dans le but de limiter les températures de combustion et donc les émissions de NOx.

Pour ce faire, un conduit de recirculation 62 relie le conduit de transfert 54 à la conduite d'alimentation en air 20.

Ce conduit passe préférentiellement par un échangeur 64 adapté au refroidissement des gaz d'échappement et porte des moyens de vannages 66, comme une vanne de préférence proportionnelle.

Dans cette variante, le moteur peut fonctionner soit avec le circuit d'amplification (circuit Boost), soit avec le circuit de recirculation des gaz d'échappement (EGR) en commandant de façon appropriée les vannes 58 et 66.

Il faut noter que les vannes 58 et 66 peuvent être remplacées par une vanne 3 voies dont la fonction sera équivalente pour contrôler les différents flux.

Bien entendu comme pour la configuration illustrée à la figure 2, le turbocompresseur peut être un turbocompresseur avec une turbine 32 à double entrée 34' et 34" (Twin scroll) et le moteur peut comprendre à un premier collecteur d'échappement 26' avec une première sortie de gaz d'échappement 28' et un deuxième collecteur d'échappement 26" qui comporte une deuxième sortie de gaz d'échappement 28".

Les deux sorties de gaz d'échappement aboutissent à la turbine avec une première entrée 34' de gaz d'échappement raccordée à la première sortie 28' de gaz d'échappement du premier collecteur 26' et une deuxième entrée 34" raccordée à la deuxième sortie 28" de gaz d'échappement du deuxième collecteur d'échappement 26".

Comme mieux visible sur la figure, il est prévu, deux conduits de transfert 54' et 54" qui permettent de faire circuler une partie de l'air comprimé sortant du compresseur 38 vers les entrées 34' et 34" de la turbine.

Plus précisément, chaque conduit de transfert partiel prend naissance sur la conduite 60, à un point de d'intersection 56' et 56" entre le compresseur et le radiateur de refroidissement 52. L'un 54' des conduits aboutit à l'entrée 34' de la turbine par sa jonction avec la première sortie 28' de gaz d'échappement alors que l'autre 54" des conduits aboutit à l'autre entrée 34" de cette turbine par sa jonction avec la deuxième sortie 28" de gaz d'échappement.

Chaque conduit porte des moyens de vannage 58' et 58", comme une vanne proportionnelle, commandés par un moyen de commande, qui peut être commun aux deux moyens de vannage. Cette vanne permet ainsi de contrôler la circulation de l'air comprimé qui passe dans le conduit.

Avantageusement, chaque conduit comporte également un clapet anti-retour 60' et 60" qui interdit la circulation de l'air comprimé du conduit vers le compresseur.

Dans cette configuration, le conduit de recirculation 62 est relié aux deux conduits de transfert 54' et 54" par des conduits 62' et 62".

En fonctionnement et comme illustré sur la figure 5, le moteur peut fonctionner avec une augmentation de la vitesse de la turbine, montrée par le marquage "Zone Boost", ou avec une recirculation des gaz d'échappement, montrée par le marquage "Zone EGR", ou sans augmentation de cette vitesse de la turbine et sans recirculation des gaz d'échappement en dehors de ces deux zones.

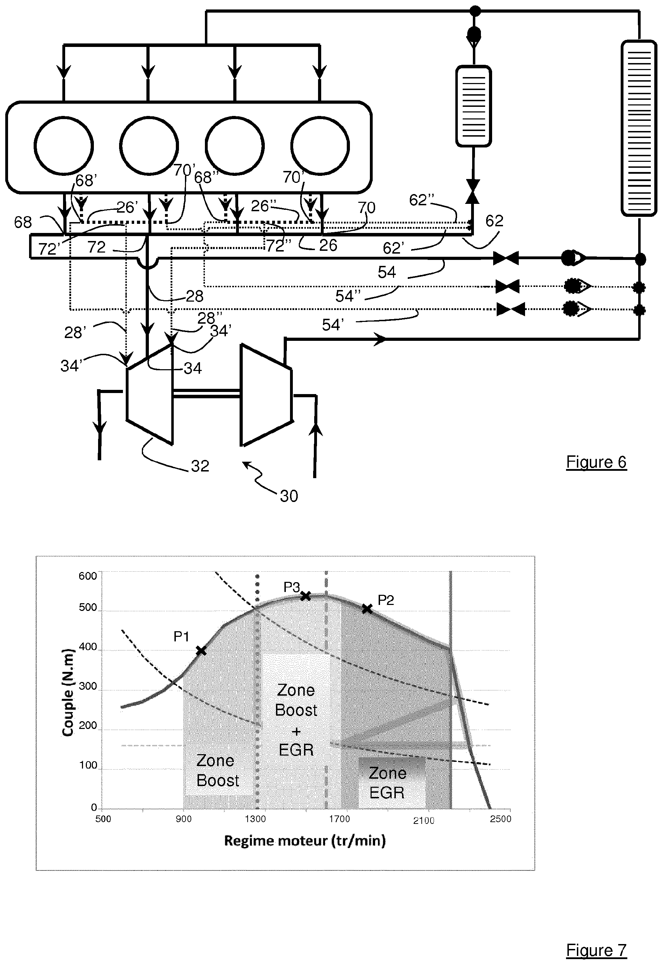

Tel qu'illustré sur la deuxième variante de la figure 6, le moteur peut fonctionner soit avec le circuit d'amplification de vitesse de la turbine (Boost), soit avec le circuit de recirculation de gaz d'échappement (EGR), soit avec les deux circuits.

Pour cela, et pour faire fonctionner le circuit Boost et le circuit EGR simultanément, les deux circuits sont connectés sur le collecteur d'échappement 26 en deux points suffisamment éloignés l'un de l'autre et la sortie 28 des gaz d'échappement vers l'entrée 34 de la turbine 32 est positionnée entre lesdits deux points.

Plus précisément, dans le cas d'un turbocompresseur 30 avec une turbine 32 à simple entrée 34, le conduit de transfert 54 arrive à un point 68 du collecteur et le conduit de recirculation 62 d'échappement prend naissance en une autre point 70 du collecteur qui est éloigné du point d'arrivée 68 et le point 72 de la sortie 28 des gaz d'échappement vers l'entrée 34 de la turbine 32 est positionnée entre ces deux points.

Comme mentionné pour les figures 2 et 4, le turbocompresseur de la figure 6 peut être un turbocompresseur avec une turbine 32 à double entrée 34' et 34" et le collecteur d'échappement peut être divisé en deux collecteurs distincts 26' et 26" avec deux sorties 28' et 28".

Ainsi, pour le collecteur 26', le conduit 54' de transfert arrive à un point 68' du collecteur 26', le conduit de recirculation 62' de gaz d'échappement part d'un autre point 70' du collecteur 26' et le point 72' de la sortie 28' des gaz d'échappement vers l'entrée 34' de la turbine 32 est positionnée entre ces deux points.

Similairement, pour le collecteur 26", le conduit 54" de transfert arrive à un point 68" du collecteur 26", le conduit de recirculation 62" de gaz d'échappement part d'un autre point 70" du collecteur 26" et le point 72" de la sortie 28" des gaz d'échappement vers l'entrée 34" de la turbine 32 est positionnée entre ces deux points.

Comme représenté sur la figure 7, le moteur peut fonctionner avec une augmentation de la vitesse de la turbine, montrée par le marquage "Zone Boost", ou avec une recirculation des gaz d'échappement, montrée par le marquage "Zone EGR", ou avec une augmentation de la vitesse de la turbine associée à une recirculation des gaz d'échappement ("Zone Boost + EGR") ou en dehors de ces trois zones.

Pour assurer un fonctionnement adéquate des moteurs décrits ci-dessus, il est essentiel d'utiliser une méthode de contrôle pour que le taux de compression de l'air issu du compresseur et/ou pour que la quantité de gaz d'échappement dirigés vers l'admission du moteur correspondent aux points de fonctionnement de ces moteurs tels que ceux contenus dans la cartographie que comporte habituellement ces moteurs.

Il est donc nécessaire d'utiliser une méthode visant à connaitre le débit d'air comprimé objectif (Qair obj) à admettre dans la turbine suivant une cartographie prédéfinie du moteur donnant le débit d'air comprimé objectif (Qair obj) en fonction des caractéristiques du point de fonctionnement du moteur : régime, couple, etc... et à corriger le débit d'air estimé à l'entrée de la turbine (Qair est) pour qu'il se rapproche de celui du débit objectif de manière à obtenir le taux de compression de l'air en sortie compresseur pour être admis dans le collecteur d'admission de façon à correspondre au point de fonctionnement du moteur.

Ainsi, de manière générale, par cette méthode :
- à partir d'un point de fonctionnement du moteur, on connait le débit d'air comprimé objectif (Qair obj) qui doit être introduit dans la turbine par le circuit d'amplification de la vitesse de la turbine (Boost),
   - on estime le débit d'air réel (Qair est) qui est admis dans turbine au travers du circuit d'amplification (Boost),
   - on compare les deux débits,
   - en cas de différence entre les deux débits, on contrôle le débit d'air introduit dans la turbine par le circuit d'amplification pour qu'il corresponde au débit d'air théorique.

Il est à noter que l'on peut envisager plusieurs types d'estimateurs du débit d'air comprimé.

Notamment, on peut utiliser un estimateur de débit par la mesure du débit d'admission et la connaissance du rendement volumétrique du moteur :
- Dans le cas sans EGR :
   ∘ Débitmètre d'air admission (entrée compresseur)
   ∘ Cartographie de débit d'air (Qair/Régime/P2/T2) issu des fonctionnements sans BOOST
   ∘ Taux Boost = ((Qair mes/Qair theo (ss Boost))-1)
   ∘ Débit Boost = Taux Boost x Qair mes
   ∘ Taux Boost = ((Qair mes/Qair theo (ss Boost))-1)
   ∘ Débit Boost = Taux Boost x Qair mes
- Dans le cas de l'utilisation de Boost ou de l'EGR :
   ∘ Débitmètre d'air admission (entrée compresseur)
   ∘ Cartographie de débit d'air (Qair/Régime/P2/T2) issu des fonctionnements sans BOOST et sans EGR
   ∘ Taux Boost /EGR = ((Qair mes/Qair theo (ss Boost/EGR))-1)
   ∘ Débit Boost/EGR = Taux Boost/EGR x Qair mes
- Dans le cas de l'utilisation de Boost et/ou de l'EGR :
   ∘ Débitmètre d'air admission (entrée compresseur)
   ∘ Cartographie de débit d'air (Qair/Régime/P2/T2) issu des fonctionnements sans BOOST et sans EGR
   ∘ Sonde de richesse admission
   ∘ Taux Boost /EGR = ((Qair mes/Qair theo (ss Boost/EGR))-1)
   ∘ Débit Boost/EGR = Taux Boost/EGR x Qair mes

On peut également utiliser un estimateur de débit par la mesure de la richesse à l'échappement
- Dans le cas sans EGR :
   ∘ Richesse échappement (sortie turbine)
   ∘ Cartographie de richesse échappement (Qair/Régime/P2/T2) issu des fonctionnements sans BOOST
   ∘ Taux Boost = ((Qair mes/Qair theo (ss Boost))-1)
   ∘ Débit Boost = Taux Boost x Qair mesuré
- Dans le cas de l'utilisation de Boost ou de l'EGR :
   ∘ Richesse échappement (sortie turbine)
   ∘ Cartographie richesse échappement (Qair/Régime/P2/T2) issu des fonctionnements sans BOOST et sans EGR
   ∘ Taux Boost/EGR = ((Qair mes/Qair theo (ss Boost/EGR))-1)
   ∘ Débit Boost /EGR = Taux Boost /EGR x Qair mesuré
- Dans le cas de l'utilisation de Boost et/ou de l'EGR :
   ∘ Richesse échappement (sortie turbine)
   ∘ Cartographie richesse échappement (Qair/Régime/P2/T2) issu des fonctionnements sans BOOST et sans EGR
   ∘ Sonde de richesse admission
   ∘ Taux Boost/EGR = ((Qair mes/Qair theo (ss Boost/EGR))-1)
   ∘ Débit Boost /EGR = Taux Boost /EGR x Qair mesuré

En revenant aux exemples des figures 1 et 2 et à titre d'exemple pour mieux illustrer l'invention, deux points de fonctionnements (P1 et P2) ont été choisis (voir figure 3) sur la courbe en trait plein de fonctionnement en pleine charge.

L'un P1 des points va nécessiter une amplification de vitesse de la turbine 32 (Zone Boost) du turbocompresseur 30 pour obtenir en sortie du compresseur 38 le taux de compression d'air souhaité à admettre dans le collecteur d'admission.

L'autre des points P2 se situe dans une zone de fonctionnement où la quantité de gaz d'échappement introduit dans la turbine par la sortie 28 de gaz d'échappement est suffisante pour obtenir le taux de compression de l'air en sortie du compresseur.

Pour le point de fonctionnement P1,
- on connait la quantité d'air comprimé (Qair obj) à admettre dans turbine 32 par le conduit de transfert 54 (ou 54', 54"),
- on estime la quantité d'air comprimé (Qair est) admis dans la turbine par le conduit de transfert,
- on compare les deux quantités,
- en cas de différence entre ce deux quantités, on commande la vanne 58; (ou 58', 58") en ouverture ou en fermeture pour que la quantité d'air comprimé admis dans la turbine corresponde à la quantité estimée.

Dans le cas du point de fonctionnement P2, la quantité de gaz d'échappement introduite dans la turbine par la sortie 28 (ou 28', 28") est suffisante pour obtenir le taux de compression de l'air souhaité en sortie du compresseur 38.

De ce fait, l'estimation de la quantité d'air comprimé à admettre dans turbine 32 correspond à celle de la quantité objectif avec une différence nulle entre les deux quantités et la vanne 58 (ou 58', 58") est commandée en fermeture.

Ainsi, le passage du fonctionnement du moteur de la Zone Boost à l'autre zone ne nécessite que la fermeture de la vanne 58 (ou 58',58").

On se reporte maintenant à la variante de la figure 4 sur laquelle sont associés un circuit d'amplification de vitesse de la turbine (circuit Boost) et un circuit de recirculation des gaz d'échappement (circuit EGR) vers le collecteur d'admission du moteur. Ces deux circuits fonctionnent de manière alternative de façon à pouvoir répondre aux performances du moteur.

Dans cette variante, la synergie entre l'utilisation du circuit EGR et du circuit Boost passe également par une méthode permettant un contrôle adapté des deux circuits. Ce contrôle doit permettre de tirer le meilleur parti de la combinaison des deux circuits. Cette méthode permet ainsi de piloter l'ouverture et la fermeture des vannes de façon optimiser la réponse du moteur

Pour encore mieux expliciter la méthode deux points de fonctionnements (P1 et P2) ont été choisis (voir figure 5) la courbe en trait plein de fonctionnement en pleine charge.

Le point P1 va nécessiter une amplification de vitesse de la turbine 32 (Zone Boost) du turbocompresseur 30 pour obtenir en sortie du compresseur 38 le taux de compression d'air souhaité.

L'autre des points P2 se situe dans une zone de fonctionnement du moteur (Zone EGR) où une recirculation des gaz d'échappement vers l'admission du moteur est nécessaire pour limiter les émissions de polluants, notamment de NOx, et où la quantité de gaz d'échappement introduit dans la turbine par la sortie 28 de gaz d'échappement est suffisante pour obtenir le taux de compression de l'air en sortie du compresseur.

Dans cette variante et pour le point de fonctionnement P1 :
- on connait la quantité d'air comprimé (Qair obj) à admettre dans turbine 32 par le conduit de transfert 54 (ou 54', 54"),
- on estime la quantité d'air comprimé (Qair est) admis dans la turbine par le conduit de transfert,
- on compare les deux quantités,
- en cas de différence entre ce deux quantités, on commande la vanne 58 (ou 58', 58") en ouverture ou en fermeture pour que la quantité d'air comprimé admis dans la turbine corresponde à la quantité connu (Qobj).

Pour le point de fonctionnement P2, la quantité de gaz d'échappement introduite dans la turbine par la sortie 28 (ou 28', 28") est suffisante pour obtenir le taux de compression de l'air souhaité en sortie du compresseur 38 et la vanne 58 (ou 58', 58") est commandée en fermeture puisque l'estimation de la quantité d'air comprimé à admettre dans turbine 32 correspond à celle de la quantité objectif.

A la fermeture de la vanne 58 (ou 58', 58), la vanne 66 du circuit EGR est commandée en ouverture pour admettre des gaz d'échappement à l'admission 18 du moteur.

Inversement, pour le passage de la zone EGR à la zone Boost, la vanne 66 du circuit EGR est commandée en fermeture et la vanne 58 (ou 58', 58) est commandée en ouverture.

On se réfère à la variante de la figure 6 sur laquelle sont associés également un circuit d'amplification de vitesse de la turbine (circuit Boost) et un circuit de recirculation des gaz d'échappement (circuit EGR) vers le collecteur d'admission du moteur.

A la différence de la variante de la figure 4, ces deux circuits fonctionnent de manière alternative ou de manière simultanée de façon à pouvoir répondre aux performances du moteur.

A titre uniquement d'exemple, trois points de fonctionnements (P1, P2 et P3) ont été choisis (voir figure 7) sur la courbe en trait plein de fonctionnement en pleine charge.

Le point P1 va nécessiter une amplification de vitesse de la turbine 32 (Zone Boost) du turbocompresseur 30 pour obtenir en sortie du compresseur 38 le taux de compression d'air souhaité.

L'autre des points P2 se situe dans une zone de fonctionnement du moteur (Zone EGR) où un recirculation des gaz d'échappement vers l'admission du moteur est nécessaire pour limiter les émissions de polluants, notamment de NOx, et où la quantité de gaz d'échappement introduit dans la turbine par la sortie 28 de gaz d'échappement est suffisante pour obtenir le taux de compression de l'air en sortie du compresseur.

Enfin le point de fonctionnement P3 se situe dans une zone de fonctionnement du moteur (Zone Boost + EGR) où une amplification de vitesse de la turbine 32 (Zone Boost) du turbocompresseur 30 est nécessaire et où une recirculation des gaz d'échappement vers l'admission du moteur est également nécessaire pour limiter les émissions de polluants, notamment de NOx, tout en permettant d'obtenir obtenir en sortie du compresseur 38 le taux de compression d'air souhaité.

Dans cette variante et pour le point de fonctionnement P1 :
- on connait la quantité d'air comprimé (Qair obj) à admettre dans turbine 32 par le conduit de transfert 54 (ou 54', 54"),
- on estime la quantité d'air comprimé (Qair est) admis dans la turbine par le conduit de transfert,
- on compare les deux quantités,
- en cas de différence entre ce deux quantités, on commande la vanne 58 (ou 58', 58") en ouverture ou en fermeture pour que la quantité d'air comprimé admis dans la turbine corresponde à la quantité estimée.

Pour le point de fonctionnement P3 de la zone EGR, l'estimation du débit d'air comprimé est nulle, ce qui a pour effet d'entraîner la fermeture de la vanne 58 (ou 58', 58") puisque la quantité de gaz d'échappement introduite dans la turbine par la sortie 28 (ou 28', 28") est suffisante pour obtenir le taux de compression de l'air souhaité en sortie du compresseur 38.

En ce qui concerne le point P2, le circuit d'amplification de la vitesse est contrôlé d'une façon similaire à celui du point P1 (estimation + mesure + comparaison) avec une différence selon laquelle la commande la vanne 58 (ou 58', 58") en degré d'ouverture ou en degré de fermeture est également tributaire du degré d'ouverture de la vanne 66 du circuit EGR pour la quantité de gaz d'échappement dirigée vers le collecteur d'admission. Ceci permet d'obtenir une quantité de gaz d'échappement à l'entrée de la turbine qui correspond à la demande du point de fonctionnement.

## Revendications

1. Méthode de contrôle de la quantité d'air introduit à l'admission d'un moteur à combustion interne suralimenté, ledit moteur comprenant un collecteur d'admission (18) et au moins une sortie (28; 28', 28") de gaz d'échappement reliée à un collecteur d'échappement (26; 26', 26"), ledit moteur comprenant un turbocompresseur (30) avec une turbine (32) à au moins une entrée (34; 34', 34") connectée à ladite au moins sortie de gaz d'échappement et avec un compresseur (38) d'air extérieur, et au moins un circuit d'amplification de la vitesse de la turbine (Boost) avec au moins un conduit de transfert (54; 54', 54") pour l'air comprimé du compresseur vers l'entrée de la turbine contrôlé par un moyen de vannage (58; 58', 58"), **caractérisée en ce que** :
- à partir d'un point de fonctionnement (P1, P2, P3) et d'une cartographie prédéfinie du moteur, on connait le débit d'air comprimé objectif (Qair obj) qui doit être introduit dans la turbine par le circuit d'amplification (Boost),
- on estime le débit d'air réel (Qair estimé) qui est admis dans turbine au travers du circuit d'amplification (Boost),
- on compare les deux débits,
- en cas de différence entre les deux débits, on contrôle le débit d'air introduit dans la turbine par le circuit d'amplification pour qu'il corresponde au débit d'air objectif (Qair obj).

2. Méthode selon la revendication 1, **caractérisée en ce que** l'on ferme le transfert pour l'air comprimé du compresseur vers l'entrée de la turbine lorsque la différence entre le débit d'air comprimé objectif (Qair obj) et le débit d'air estimé (Qair est) est nulle.

3. Méthode de contrôle de la quantité d'air introduit à l'admission d'un moteur à combustion interne suralimenté selon l'une des revendications précédentes, ledit moteur comprenant en outre un circuit de recirculation de gaz d'échappement (EGR) vers le collecteur d'admission (18), **caractérisée en ce que**, pour l'utilisation du circuit de recirculation de gaz d'échappement (EGR), on maintient en fermeture le circuit d'amplification de la vitesse de la turbine (Boost).

4. Méthode selon la revendication 3, **caractérisée en ce que**, pour l'utilisation du circuit d'amplification de la vitesse de la turbine (Boost), on maintient en fermeture le circuit de recirculation de gaz d'échappement (EGR).

5. Méthode de contrôle de la quantité d'air introduit à l'admission d'un moteur à combustion interne suralimenté selon l'une des revendications 1 ou 2, ledit moteur comprenant en outre un circuit de recirculation de gaz d'échappement (EGR) vers le collecteur d'admission (18), **caractérisée en ce que**, pour l'utilisation simultanée du circuit d'amplification de la vitesse de la turbine (Boost) et du circuit de recirculation de gaz d'échappement (EGR), on contrôle le débit d'air introduit dans la turbine par le circuit d'amplification pour compenser le débit de gaz d'échappement recirculés.

6. Méthode selon la revendication 1, **caractérisée** en que l'on estime le débit d'air comprimé (Qair estimé) par la mesure de débit d'admission.

7. Méthode selon la revendication 1, **caractérisée** en que l'on estime le débit d'air comprimé (Qair estimé) par la mesure de la richesse à l'échappement.

## Patentansprüche

1. Verfahren zur Steuerung der am Einlass eines aufgeladenen Verbrennungsmotors eingebrachten Luftmenge, wobei der Motor einen Einlasskrümmer (18) und zumindest einen mit einem Abgaskrümmer (26; 26', 26") verbundenen Abgasauslass (28; 28', 28") umfasst, wobei der Motor einen Turbolader (30) mit einer Turbine (32) mit zumindest einem Einlass (34; 34', 34"), der mit zumindest einem Abgasauslass verbunden ist, und mit einem Außenluftverdichter (38) und zumindest einen Kreislauf zur Verstärkung der Turbinendrehzahl (Boost) mit zumindest einer Leitung (54; 54', 54") für den Übergang der verdichteten Luft des Verdichters zum Turbineneingang, die durch eine Ventileinrichtung (58; 58', 58") gesteuert wird, umfasst, **dadurch gekennzeichnet, dass**:
- aus einem Betriebspunkt (P1, P2, P3) und einer vordefinierten Kartographie des Motors der durch die Verstärkungsschaltung (Boost) in die Turbine einzubringende Sollvolumenstrom verdichteter Luft (Qair obj) bekannt ist,
- der durch die Verstärkungsschaltung (Boost) in die Turbine eingelassene tatsächliche Luftvolumenstrom (Qair estime) geschätzt wird,
- die beiden Volumenströme verglichen werden,
- bei einer Differenz zwischen den beiden Volumenströmen der durch die Verstärkungsschaltung in die Turbine eingelassene Luftvolumenstrom so gesteuert wird, dass er dem Sollluftvolumenstrom (Qair obj) entspricht.

2. Verfahren nach Anspruch 1, **dadurch gekennzeichnet, dass** der Übergang für die verdichtete Luft vom Kompressor zum Turbineneinlass geschlossen wird, wenn die Differenz zwischen dem Sollvolumenstrom verdichteter Luft (Qair obj) und dem geschätzten Luftvolumenstrom (Qair est) Null ist.

3. Verfahren zur Steuerung der in den Einlass eines aufgeladenen Verbrennungsmotors eingebrachten Luftmenge nach einem der vorangehenden Ansprüche, wobei der Motor ferner einen Kreislauf zur Rückführung der Abgase (EGR) zum Einlasskrümmer (18) umfasst, **dadurch gekennzeichnet, dass** für die Verwendung des Kreislaufs zur Rückführung der Abgase (EGR) der Kreislauf zur Erhöhung der Turbinendrehzahl (Boost) geschlossen gehalten wird.

4. Verfahren nach Anspruch 3, **dadurch gekennzeichnet, dass** für die Verwendung des Kreislaufs zur Erhöhung der Turbinendrehzahl (Boost) der Kreislauf zur Rückführung der Abgase (EGR) geschlossen gehalten wird.

5. Verfahren zur Steuerung der in den Einlass eines aufgeladenen Verbrennungsmotors eingebrachten Luftmenge nach einem der Ansprüche 1 oder 2, wobei der Motor ferner einen Kreislauf zur Rückführung der Abgase (EGR) zum Einlasskrümmer (18) umfasst, **dadurch gekennzeichnet, dass** für die gleichzeitige Verwendung des Kreislaufs zur Erhöhung der Turbinendrehzahl (Boost) und des Kreislaufs zur Rückführung der Abgase (EGR) der durch die Verstärkungsschaltung in die Turbine eingebrachte Luftvolumenstrom so gesteuert wird, dass der Volumenstrom der zurückgeführten Abgase kompensiert wird.

6. Verfahren nach Anspruch 1, **dadurch gekennzeichnet, dass** der Volumenstrom verdichteter Luft (Qair estime) durch Messung des Einlassvolumenstroms geschätzt wird.

7. Verfahren nach Anspruch 1, **dadurch gekennzeichnet, dass** der Volumenstrom verdichteter Luft (Qair estime) durch Messung der Fettheit am Auspuff geschätzt wird.

## Claims

1. Method for controlling the quantity of air introduced into the intake of a supercharged internal combustion engine, the said engine comprising an intake manifold (18) and at least one exhaust gas outlet (28; 28', 28") connected to an exhaust manifold (26; 26', 26"), the said engine comprising a turbocharger (30) with a turbine (32) having at least one scroll inlet (34; 34', 34") connected to said at least one exhaust gas outlet and with an external-air compressor (38), and at least one boost circuit boosting the speed of the turbine with at least one transfer duct (54; 54', 54") for transferring the compressed air from the compressor toward the scroll inlet of the turbine and controlled by a throttling means (58; 58', 58"), **characterized in that**:
- from an operating point (P1, P2, P3) and a predefined map of the engine, the target compressed air flow rate (Qair obj) that needs to be introduced into the turbine by the boost circuit is known,
- the actual air flow rate (Qair est) admitted to the turbine through the boost circuit is estimated,
- the two flow rates are compared,
- in the event of there being a difference between the two flow rates, the flow rate of air introduced into the turbine by the boost circuit is controlled to make it correspond to the target air flow rate (Qair obj).

2. Method according to Claim 1, **characterized in that** the transfer of compressed air from the compressor to the turbine scroll inlet is closed when the difference between the target compressed air flow rate (Qair obj) and the estimated air flow rate (Qair est) is zero.

3. Method for controlling the quantity of air introduced into the intake of a supercharged internal combustion engine according to one of the preceding claims, the said engine further comprising an exhaust gas recirculation (EGR) circuit recirculating exhaust gases to the inlet manifold (18),
**characterized in that**, for use of the exhaust gas recirculation (EGR) circuit, the turbine speed boost circuit is kept closed.

4. Method according to Claim 3, **characterized in that**, for use of the turbine speed boost circuit, the exhaust gas recirculation (EGR) circuit is kept closed.

5. Method of controlling the quantity of air introduced into the intake of a supercharged internal combustion engine according to one of Claims 1 and 2, the said engine further comprising an exhaust gas recirculation (EGR) circuit recirculating exhaust gas to the intake manifold (18), **characterized in that**, for simultaneous use of the turbine speed boost circuit and of the exhaust gas recirculation (EGR) circuit, the flow rate of air introduced into the turbine by the boost circuit is controlled in such a way as to compensate for the flow rate of recirculated exhaust gases.

6. Method according to Claim 1, **characterized in that** the compressed air flow rate (Qair est) is estimated by measuring the intake flow rate.

7. Method according to Claim 1, **characterized in that** the compressed air flow rate (Qair est) is estimated by measuring the richness in the exhaust.
